(19) Europäisches Patentamt
European Patent Office
Office européen des brevets

(11) **EP 1 333 547 B1**

(12) **EUROPÄISCHE PATENTSCHRIFT**

(45) Veröffentlichungstag und Bekanntmachung des Hinweises auf die Patenterteilung:
**19.04.2006 Patentblatt 2006/16**

(51) Int Cl.:
***H01S 3/063*** *(2006.01)*     ***H01S 3/0941*** *(2006.01)*

(21) Anmeldenummer: **03001954.1**

(22) Anmeldetag: **30.01.2003**

(54) **Festkörper-Laserverstärker**

Solid-state laser amplifier

Amplificateur laser à l'état solide

(84) Benannte Vertragsstaaten:
**AT BE BG CH CY CZ DE DK EE ES FI FR GB GR HU IE IT LI LU MC NL PT SE SI SK TR**

(30) Priorität: **02.02.2002 DE 10204246**

(43) Veröffentlichungstag der Anmeldung:
**06.08.2003 Patentblatt 2003/32**

(73) Patentinhaber: **Tesat-Spacecom GmbH & Co. KG 71522 Backnang (DE)**

(72) Erfinder: **Wittrock, Ulrich Dr. Prof. 48151 Münster (DE)**

(74) Vertreter: **Schuster, Gregor et al Patentanwaltskanzlei Schuster, Wiederholdstrasse 10 70174 Stuttgart (DE)**

(56) Entgegenhaltungen:
**DE-A- 19 722 943     US-A- 4 949 346 US-A- 6 167 069**

- **BERNARD J E ET AL: "HIGH-REPETITION -RATE DIODE-PUMPED ND:YVO4 SLAB LASER" OPTICS LETTERS, OPTICAL SOCIETY OF AMERICA, WASHINGTON, US, Bd. 19, Nr. 22, 15. November 1994 (1994-11-15), Seiten 1861-1863, XP000475135 ISSN: 0146-9592**

EP 1 333 547 B1

## Beschreibung

Die Erfindung betrifft Festkörperlaser und Festkörperlaserverstärker. Solche Laser und Laserverstärker haben vielfältige Einsatzgebiete, sie werden z. B. in der Materialbearbeitung, der Medizin, der Telekommunikation und der optischen Messtechnik eingesetzt.

## Stand der Technik mit Fundstellen

Es sind eine Vielzahl unterschiedlicher Systemkonzepte für Festkörperlaser und Festkörperlaserverstärker bekannt. Einen guten Überblick gibt das Buch von *Walter Koechner: Solid State Laser Engineering, Springer Verlag, 5. Auflage, 1999.* Ursprünglich wies das aktive Element eines Festkörperlasers eine zylindrische Stabform auf, und die optische Anregungsleistung wurde mit starken Gasentladungslampen erzeugt. Inzwischen werden jedoch vorwiegend Halbleiterlaser zur optischen Anregung von Festkörperlasern eingesetzt. Mit der Anregung durch Halbleiterlaser kann ein wesentlich höherer Wirkungsgrad der Umsetzung der elektrischen Eingangsteistung in Laserleistung erreicht werden. Schon bei der Anregung von Festkörperlasern mit Gasentladungslampen waren neben der zylindrischen Stabform des laseraktiven Festkörpers andere geometrische Formen bekannt, wie beispielsweise die runde Plattenform oder die rechteckige Plattenform (engl. Slab Laser). Die Anregung mit Halbleiterlasern hat jedoch zu einer ganzen Reihe neuer geometrischer Formen der verwendeten laseraktiven Festkörper und zu neuen Systemkonzepten geführt, wie z. B. dem Scheibenlaser (Europäisches Patent 0 632 551), dem Mikrochip-Laser, dem nicht-planaren monolithischen Ringlaser, oder dem "Grazing Incidence Slab Laser" (US Patent 6,002,695 und US Patent 5,315,612).

## Kritik des Stands der Technik

Gemeinsames Ziel fast aller Systemkonzepte für Festkörperlaser oder Festkörperlaserverstärker ist, eine möglichst gute Strahlqualität der erzeugten oder verstärken Laserstrahlung zu erreichen. Die Strahlqualität eines Lasers, die gleichzusetzen ist mit seiner Fokussierbarkeit, ist ein entscheidendes Qualitätskriterium von Lasern. Neben dem Ziel möglichst guter Strahlqualität werden jedoch noch andere Ziele angestrebt, wie z. B. ein hoher Wirkungsgrad sowie ein einfacher und kompakter Aufbau.

Alle bekannten Konzepte haben jedoch gewisse Nachteile. Der traditionelle Stablaser hat auch bei Anregung mit Halbleiterlasern eine thermische Linse und spannungsoptische Doppelbrechung, die bei höherer Laserleistung zu einer schlechten Strahlqualität führt.

Ein Slab-Laser mit zick-zack Strahlengang hat dagegen bei geeigneter Auslegung nur eine sehr geringe thermische Linse und kaum Spannungsdoppelbrechung. Voraussetzung dafür ist allerdings, dass der Kristall des Stab-Lasers ein großes Seitenverhältnis hat. Das Seitenverhältnis ist das Quotient der großen Kristallabmessung quer zum Laserstrahl "(Höhe") zur kleinen Kristallabmessung quer zum Laserstrahl ("Dicke"). Ein großes Seitenverhältnis der Kristallabmessungen hat eine große Höhe des Laserkristalls zur Folge, denn der Kristall kann nicht beliebig dünn gemacht werden, da sonst seine mechanische Festigkeit leidet. Eine große Kristallhöhe aber führt zum Anschwingen hoher transversaler Moden, was zu einer schlechten Strahlqualität führt. Es hat in der Vergangenheit sehr viele Versuche gegeben, durch die Verwendung spezieller Resonatoren (z. B. instabiler Resonatoren oder gefalteter Resonatoren) dennoch eine gute Strahlqualität zu erreichen. Keines dieser Verfahren konnte sich jedoch in der Praxis durchsetzen, da alle sehr empfindlich gegenüber kleinsten Störungen des Laserstrahls sind. Ein weiterer Nachteil der üblichen Slab-Laser besteht darin, dass der schräge Durchgang des Laserstrahls durch die Kristallendflächen Astigmatismus hervorruft. Schließlich weisen alle bekannten Slab-Laser Aberrationen auf, die durch Verformung der Kristalloberflächen hervorgerufen werden. Bei den meisten Slab-Lasern wird der Kristall homogen über die beiden totalreflektierenden Flächen gepumpt, so dass diese Flächen nicht mehr durch Festkörper-Kontaktkühlung gekühlt werden können. Die totalreflektierenden Flächen werden daher mit einer Flüssigkeit (meistens Wasser) gekühlt, die für das Pumplicht transparent ist. Eine Flüssigkeit stellt in einem Lasersystem aber immer einen Risikofaktor dar, da bei Leckagen großer Schaden an den Optiken und der Pumplichtquelle entstehen kann. Ein weiterer Nachteil dieser Slab-Laser ist, dass sich die Spitzen des Slab-Kristalls durch thermomechanische Spannungen verformen. Wird nur eine der beiden totalreflektierenden Flächen des Slab-Kristalls gepumpt, so kann die andere Kristallfläche zur Festkörper-Kontaktkühlung verwendet werden. Allerdings führt bei dieser Ausführung eine Variation der Pumpleistung zu einer Ablenkung des Laserstrahls. Grund dafür ist die asymmetrische, sich verändernde Verformung der Kristallflächen, an denen der Laserstrahl totalreflektiert wird. Dieser Effekt, bekannt als "beam steering", führt im Verstärkerbetrieb zu einer unerwünschten Richtungsänderung des Laserstrahls, im Laseroszillatorbetrieb führt er dazu, dass der Resonator dejustiert wird und die Ausgangsleistung sinkt. In der Geschichte der Festkörperlaser haben sich sehr viele Firmen mit der Entwicklung von Slab-Lasern beschäftigt, jedoch haben nahezu alle die entsprechenden Vorhaben aufgegeben, da sich die Probleme als unlösbar herausstellten.

Der Schcibenlaser vereint in sich einige der Vorzüge des Stablasers und des Slab-Lasers. Die transversalen Abmessungen des Kristalls sind klein, ähnlich wie beim Stablaser. Da der Strahl senkrecht zu den Isothermen im Kristall verläuft, tritt wie beim Slab-Laser praktisch keine thermische Linse auf. Die Strahlqualität ist gut, wenn das Pumplicht auf einen kleinen runden Fleck in der Scheibe fokussiert wird, da dann keine höheren transversalen Moden anschwingen. Um mit dem kleinen gepumpten Bereich eine ausreichend hohe Leistung zu erreichen, muss die Scheibe sehr dünn gemacht werden, denn nur so können die thermomechanischen Spannungen gering gehalten werden. Eine dünne Scheibe absorbiert jedoch nur einen Teil des Pumplichts, so dass das Pumplicht die Scheibe mehrfach durchlaufen muss, damit man insgesamt eine ausreichende Absorption erhält. Die starke Fokussierung des Pumplichts auf einen runden Fleck erfordert einen hohen Aufwand, denn die Halbleiterlaser selbst haben eine rechteckige Apertur mit extrem großem Seitenverhältnis. Es sind daher anamorphotische Optiken erforderlich, um einen runden Strahl zu erzeugen. Die Mehrfachdurchgänge des Pumplichts durch den Kristall erfordern weitere Optiken, die den Aufwand noch einmal erhöhen. Diese beiden optischen Systeme führen zu einer insgesamt großen Bauform des Lasers, zu hohen Kosten und zu eingeschränkter Zuverlässigkeit.

Auch der monolithische Ringlaser erfordert einen runden Pumplichtstrahl und hat damit die gleichen Nachteile wie der Scheibenlaser bezüglich der Pumplicht-Formung. In einer neuartigen Ausführung wird immerhin wie beim Scheibenlaser die thermische Linse vermieden (deutsche Patentanmeldung DE 197 22 943).

Der Grazing Incidence Slab Laser kann nicht als Slab Laser im eigentlichen Sinne bezeichnet werden, da er eine erhebliche thermische Linse hat. Zwar wird, wie beim gewöhnlichen Slab-Laser, die thermische Linse in der Richtung senkrecht zur reflektierenden Fläche kompensiert, in der dazu orthogonalen Richtung tritt aber eine starke thermische Linsenwirkung auf. Der Grund ist, dass in dieser Richtung keine konstante Temperatur im Laserkristall vorliegt. Das Licht eines Halbleiterlaser-Barrens wird mit einer Zylinderlinse in den Laserkristall fokussiert oder durch direkte Kopplung in den Kristall geleitet. Das Pumplicht tritt dabei durch diejenige Kristallfläche in den Kristall ein, an der auch der Laserstrahl des Festkörperlasers reflektiert wird. Da diese Kristallfläche zur Pumplichteinkopplung benötigt wird, kann sie nicht gleichzeitig als Kühlfläche für eine Kontaktkühlung dienen. Der Kristall wird daher an den zwei großen, zu dieser Fläche senkrechten Flächen gekühlt. Dies führt jedoch zu einem Temperaturgradienten quer zum Laserstrahl und damit zu einer thermischen Zylinderlinse.

Allgemein läst sich feststellen, dass es derzeit zwei Arten von Halbleiterlaser-gepumpten Festkörperlasern gibt. Zum Einen Laser, bei denen die Geometrie des aktiven Mediums rechteckig ist und damit der Geometrie der Halbleiterlaserbarren angepasst ist. Dies sind die Slab-Laser, die jedoch starke Aberrationen und eine schlechte Strahlqualität aufweisen. Zum Anderen Laser, bei denen das gepumpte Volumen des aktiven Mediums der runden Form des $TEM_{00}$-Modes angepasst ist. Diese Laser (longitudinal gepumpter Stablaser, Scheibenlaser, monolithischer Ringlaser) erfordern jedoch eine aufwendige Strahlformung des Pumplichts der Halbleiterlaser, um den rechteckigen Strahlquerschnitt, mit dem das Licht den Halbleiterlaserbarren verlässt, in einen runden Strahlquerschnitt zu transformieren, mit dem der zylindrische Bereich des aktiven Mediums gepumpt werden kann. Diese Strahltransformationsoptiken sind sehr aufwändig und führen zu Leistungseinbußen, wie beispielsweise nachzulesen ist in der Zeitschrift *Laser Focus World (Laser Focus World, 98 Spit Brook Road, Nashua, NH 03062, USA), Ausgabe Dezember 2001, S. 115 ff, Laser Focus World, Ausgabe Mai 1998, S. 32 ff*, sowie *Laser Focus World, Ausgabe Mai 1994, S. 46 ff.*

## Aufgabe

Der Erfindung liegt die Aufgabe zugrunde, einen Festkörperlaser oder Festkörperlaserverstärker zu entwickeln, der die beschriebenen Nachteile der bekannten Systeme nicht aufweist. Insbesondere sollte er keine thermische Linse und keine Spannungsdoppelbrechung aufweisen, einen beugungsbegrenzten Laserstrahl liefern, aber trotzdem ohne anamorphotische Strahlformung für das Pumplicht der Halbleiterlaser auskommen, d. h. das Systemkonzept sollte sowohl an den runden $TEM_{00}$-Mode angepasst sein, als auch an das rechteckige Strahlprofil der Halbleiterlaser. Außerdem sollte der Laser einfach und kostengünstig aufgebaut sein, der laseraktive Festkörper und die anderen optischen Komponenten sollte keinen Astigmatismus und kein "beamsteering" für den Laserstrahl aufweisen, der Laser sollte eine hohe Effizienz haben und durch Festkörper-Kontaktkühlung gekühlt werden.

## Lösung

Die Aufgabe wird durch eine Vorrichtung mit den Merkmalen des Anspruchs 1 gelöst.

## Beschreibung eines Ausführungsbeispiels

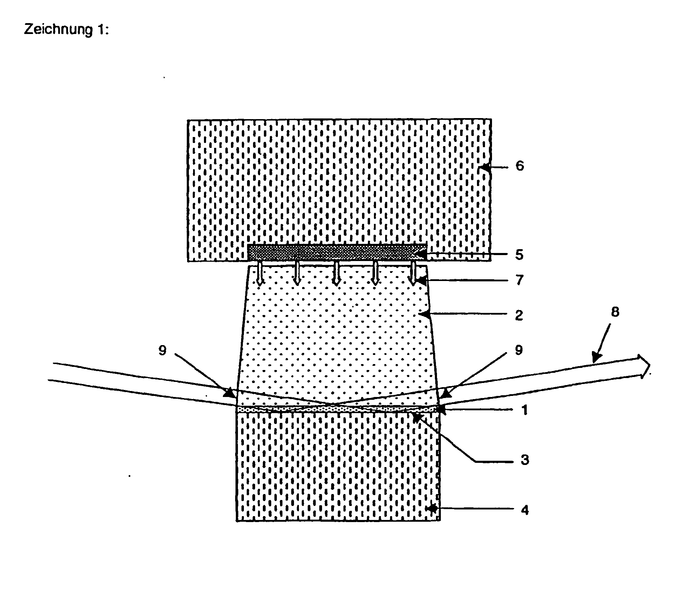

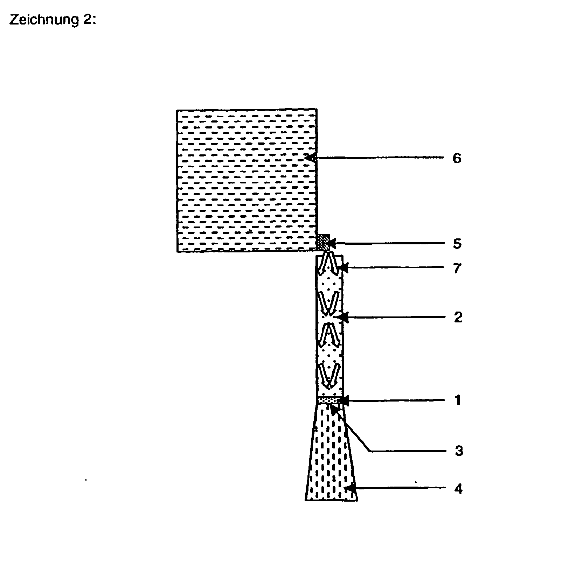

Zeichnung 1 zeigt ein Ausführungsbeispiel in einer Seitenansicht, Zeichnung 2 das gleiche Ausführungsbeispiel in einer dazu senkrechten Seitenansicht. Der laseraktive Festkörper (1) ist in diesem Ausführungsbeispiel ein Yttrium-Orthovanadat Kristall, der mit dem laseraktiven Material Neodym dotiert ist. Dieser laseraktive Festkörper (1) hat Abmessungen von 12 mm x 1,5 mm x 0,3 mm. Er ist fest mit dem nicht-laseraktiven Festkörper (2) verbunden, der hier als ein reiner Yttrium-Orthovanadat Kristall ohne Neodym-Dotierung ausgeführt ist. Dieser in der Seitenansicht (Zeichnung 1) trapezförmige Kristall hat eine Grundfläche von 12 mm x 1,5 mm und eine dazu parallele Deckfläche von 10,5 mm x 1,5 mm bei einer Höhe von 8,5 mm. Eine geeignete Art und Weise, den laseraktiven Festkörper (1) und den nicht-laseraktiven Festkörper (2) fest miteinander zu verbinden, besteht in dem Prozess des Diffusionsbondens. Bei diesem Prozess werden beide Kristalle an den zu verbindenden Flächen plan poliert, aufeinander gepresst, und bis nahe an ihren Schmelzpunkt erhitzt. Dabei verbinden sich die Kristalle nahezu unlösbar miteinander. Das Verfahren wird von der Firma Onyx Optics in Fremont, Kalifornien, USA, kommerziell angeboten. Andere Verfahren kommen ebenfalls in Betracht, beispielsweise geeignete Klebeverfahren oder Schmelzverfahren zur Verbindung eines Laserglases mit einem nicht laseraktiven Glas. Der laseraktive Festkörper (1) wird mit einem Schichtsystem (3) aus einer oder mehreren Schichten versehen, um den zu erzeugenden oder zu verstärkenden Laserstrahl (8) zu reflektieren. Das Schichtsystem (3) kann beispielsweise auf seiner dem laseraktiven Festkörper (1) zugewandten Seite eine dielektrische Schicht aus Magnesiumfluorid besitzen, das einen relativ niedrigen Brechungsindex hat, so dass der Laserstrahl an der Grenzfläche zwischen dem laseraktiven Festkörper (1) und der Magnesiumfluoridschicht bei ausreichend großem Einfallswinkel (gemessen von der Flächennormalen) Totalreflexion erfährt. Der laseraktive Festkörper (1) wird nun mit seinem Schichtsystem (3) auf einem Kühlkörper (4) befestigt, der zur Ableitung der Verlustwärme aus dem laseraktiven Festkörper (1) dient. Diese Befestigung kann zum Beispiel durch Verpressen auf den Kühlkörper (4) mit einer zwischengelegten dünnen Indiumfolie geschehen, oder durch einen wärmeleitenden Klebstoff. Der Kühlkörper (4) kann beispielsweise aus Kupfer gefertigt sein und seinerseits wiederum von einem thermoelektrischen Kühlelement gekühlt werden. Eine Pumplichtquelle (5), die auf einem Kühlkörper (6) befestigt ist, liefert das Pumplicht (7) zur optischen Anregung der laseraktiven Atome im laseraktiven Festkörper (1). Die Pumplichtquelle (5) kann beispielsweise ein Halbleiterlaser sein, der bei einer Wellenlänge von 808 nm oder 880 nm emittiert. Gebräuchlich sind ca. 1 cm lange Ausführungen mit vielen einzelnen Emittern, die als Hochleistungsdiodenlaserbarren bekannt sind. Im Fall des Ausführungsbeispiels könnte ein Laserbarren mit einer Dauerstrichausgangsleistung von 30 Watt zum Einsatz kommen. Der nicht-laseraktive Festkörper (2) ist zweckmäßigerweise allseitig poliert, so dass er das Pumplicht (7) durch Totalreflexion an seinen Seitenflächen führt. Das Schichtsystem (3) ist zweckmäßigerweise so ausgeführt, dass es auch für das Pumplicht (7) hochreflektierend ist, so dass der beim ersten Durchgang nicht im laseraktiven Festkörper (1) absorbierte Anteil des Pumplichts (7) nach der Reflexion an dem Schichtsystem (3) einen zweiten Durchgang durch den laseraktiven Festkörper (1) macht.

**Vorteile der Erfindung**

Ein wesentlicher Vorteil der Erfindung liegt darin, dass das Systemkonzept sowohl an die rechteckige Geometrie der Halbleiterlaserbarren angepasst ist, als auch an den runden Strahlquerschnitt eines beugungsbegrenzten $TEM_{00}$-Lasermodes.

Die stark längliche Fläche des laseraktiven Festkörpers passt sich der langen Dimension handelsüblicher Halbleiterlaserbarren vorteilhaft an. Dadurch kann das Pumplicht eines oder mehrerer Halbleiterlaserbarren ohne zusätzliche Strahlformung in den laseraktiven Festkörper eingekoppelt werden.

Der $TEM_{00}$-Lasermode besitzt die theoretisch bestmögliche Strahlqualität. Um in einem Lasersystem einen solchen Lasermode mit einem einfachen und zuverlässigen Laserresonator erzeugen zu können, muss die Querschnittsfläche des Laserstrahls kreisrund und möglichst klein sein. Ohne weitere Blenden stellt sich im Laserbetrieb in einem Resonator der Laserstrahl mit der größtmöglichen Querschnittsfläche ein. Bei geeigneter Wahl des Winkels zwischen dem Laserstrahl (8) und dem Schichtsystem (3) kann man erreichen, dass dies ein Laserstrahl mit quadratischem Querschnitt ist. Die Berechnung dieses Winkels mit den Methoden der Trigonometrie ist an sich einfach, führt allerdings auf eine transzendente Gleichung, die sich nicht analytisch sondern nur numerisch lösen lässt. Für den Bereich kleiner Winkel, die für die Erfindung hauptsächlich von Interesse sind, lässt sich die Gleichung allerdings nähern, indem die Winkelfunktionen Sinus und Tangens durch ihre Argumente ersetzt werden. In diesem Fall ergibt sich für den

Winkel $\alpha$ folgender Ausdruck: $\alpha = 2\dfrac{h}{l} + \dfrac{b}{l}$, wobei $\alpha$ der Winkel zwischen dem Laserstrahl (8) und der Ebene des Schichtsystems (3) ist, h die Höhe des laseraktiven Festkörpers, b dessen Breite und l seine Länge. Im Ausführungsbeispiel von Zeichnung 1 und Zeichnung 2 sind also, wie weiter oben erläutert wurde, $h = 0,3$ mm, $b = 1,5$ mm und $l = 12$ mm, so dass sich ein Winkel von $\alpha = 0,175 = 10°$ ergibt. Ein quadratischer Strahlquerschnitt kommt dem runden Strahlquerschnitt des $TEM_{00}$-Modes am nächsten. Durch Einfügen einer kreisrunden Blende in den Resonator, dessen Durchmesser etwa gleich groß ist wie die Breite b des laseraktiven Festkörpers, und die Wahl geeigneter Krümmungsradien und Abstände der Resonatorspiegel kann ein $TEM_{00}$-Mode erzwungen werden, der das laseraktive Medium nahezu vollständig ausfüllt. Damit wird das im laseraktiven Festkörper absorbierte Pumplicht mit einer hohen Effizienz in Laserlicht umgewandelt. Ein Faktor, der diese Effizienz bestimmt, ist der sogenannte Füllfaktor, das ist das Flächenverhältnis von Laserstrahlquerschnittsfläche zur freien Laserstrahl-Apertur des laseraktiven Festkörpers. Bei dem berechneten optimalen Winkel beträgt der Füllfaktor: $\pi(b/2)^2 / b^2 = \pi/4 = 0,79$. Diese Zahl bedeutet, dass bei der Anpassung des rechteckigen Pumplichtstrahls an den runden $TEM_{00}$-Lasermode nur 21% Verluste auftreten. Dieser hohe Wert des Füllfaktors ist eine entscheidende Voraussetzung für eine hohe Effizienz der Umwandlung der Pumplichtleistung in Laserlichtleistung. Dabei ist zu bedenken, dass bei dem erfindungsgemäßen Laserverstärkersystem keine verlustbehaftete Strahlformung des Pumplichts durch Mikrooptiken o. ä. notwendig ist.

Vorteilhaft ist ferner die große gekühlte Fläche des laseraktiven Festkörpers, die in Verbindung mit seiner geringen Dicke eine effiziente Kühlung und damit eine hohe Ausgangsleistung erlaubt. Besonders wichtig ist dabei, dass, anders als beim Scheibenlaser, die gekühlte Fläche wesentlich größer ist als die Laserstrahl-Querschnittsfläche, so dass die hohe Ausgangsleistung bei gleichzeitig guter Strahlqualität erzielt werden kann. Dies wird erfindungsgemäß durch den flachen Winkel des Laserstrahls (8) relativ zur gekühlten Fläche, d. h. relativ zum Schichtsystem (3) erzielt.

Ein weiterer entscheidender Vorteil der Erfindung liegt darin, dass der Laserstrahl auch bei hoher Pumpleistung durch die Temperaturgradienten im laseraktiven Festkörper nicht negativ beeinflusst wird. Dies liegt daran, dass erfindungsgemäß eine homogene Aufheizung des laseraktiven Festkörpers durch das Pumplicht in allen Ebenen parallel zur gekühlten Fläche erreicht wird. Wird dann auch noch die gekühlte Fläche gleichmäßig gekühlt, so entsteht im Kristall ein Temperaturfeld, das Isothermenebenen aufweist, die parallel zur gekühlten Fläche verlaufen. Der Laserstrahl durchläuft dieses Temperaturfeld unter einem flachen Winkel zu den Isothermenebenen, d. h. unter einem großen Winkel (größer als 45°, typisch etwa 60° bis 89°) relativ zum Temperaturgradienten, der senkrecht auf den Isothermenebenen steht. Der Laserstrahl wird an dem hochreflektierenden Schichtsystem reflektiert und durchläuft das Temperaturfeld ein zweites Mal, bevor er den laseraktiven Festkörper verlässt. Fasst man den Laserstrahl als ein Bündel von parallelen, dünnen Teilstrahlen auf, so durchläuft jeder Teilstrahl - mit geringer zeitlicher Verzögerung - die gleichen Temperaturunterschiede. Der optische Weg, der i. a. aufgrund der Temperaturabhängigkeit des Brechungsindexes eine Funktion der Temperatur ist, ist daher für alle Teilstrahlen auf dem Weg durch den laseraktiven Festkörper gleich lang und es gibt keinen Einfluss des Temperaturfeldes auf die Phasenfläche des Laserstrahls. Somit gibt es auch schädliche keine thermische Linsenwirkung oder schädliche thermo-optische Aberrationen.

Im nicht-laseraktiven Festkörper (2) gibt es keine Wärmequellen. Dieser Körper ist an allen Außenflächen durch die umgebende Luft (oder Vakuum) thermisch isoliert, bis auf die Verbindungsfläche mit dem laseraktiven Festkörper (1). Diese Verbindungsfläche ist jedoch eine Isothermenebene, wie im letzten Absatz erläutert wurde. Daher gibt es im nicht-laseraktiven Festkörper keine Temperaturgradienten und daher auch keine thermische Linsenwirkung und keine thermooptischen Aberrationen.

Die parallelen Isothermenebenen führen weiterhin zu einem nahezu ebenen Spannungszustand im laseraktiven Festkörper und im nicht-laseraktiven Festkörper. Ein solcher Spannungszustand verursacht keine Depolarisation des Laserstrahls. Dies ist ein großer Vorteil gegenüber Stablasem.

Im Betrieb als Laserverstärker bietet der schräge Einfall des Laserstrahls auf den laseraktiven Festkörper den Vorteil, dass der Laserstrahl einen langen Weg im laseraktiven Festkörper zurücklegt und damit eine hohe Verstärkung erfährt. Daher sind nur einer oder wenige Durchgänge des Laserstrahls durch den laseraktiven Festkörper notwendig, um den Laserstrahl bis über die Sättigungsintensität hinaus zu verstärken, was für einen hohen Wirkungsgrad eines Laserverstärkers notwendig ist. Dies verringert den konstruktiven Aufwand, der mit Mehrfachdurchgängen des Laserstrahls durch den laseraktiven Festkörper verbunden ist, erheblich.

Vorzugsweise wird die erste Schicht des Schichtsystems auf dem laseraktiven Festkörper als eine Schicht mit relativ kleinem Brechungsindex ausgeführt, so dass der Laserstrahl an dieser Schicht Totalreflexion erfährt. Auf diese Art entstehen keine Reflexionsverluste für den Laserstrahl, wie es bei anderen Laserkonzepten mit großen Einfallswinkeln und Vielschichtsystemen der Fall ist.

Ein weiterer Vorteil des kleinen Einfallswinkels und der Totalreflexion ist, dass nur eine Schicht notwendig ist, was zu einem verringerten Wärmewiderstand führt. Dielektrische Schichten haben i. A. eine geringe spezifische Wärmeleitfähigkeit und je geringer die Anzahl und die Dicke der Schichten des Schichtsystems sind, umso geringer ist der gesamte Wärmewiderstand des Schichtsystems. Ein geringer Wärmewiderstand ermöglicht eine effektive Kühlung und damit eine hohe Laserleistung.

Der nicht-laseraktive Festkörper (2) ist im Ausführungsbeispiel vorteilhafterweise mit leicht trapezförmigen Seitenflächen ausgeführt, so dass der Laserstrahl (8) sowohl beim Eintritt als auch beim Austritt in den bzw. aus dem nicht-laseraktiven Festkörper dessen Oberflächen senkrecht durchstößt. Dadurch entsteht kein störender Astigmatismus wie bei den bekannten Slab-Lasern.

Die Flächen (9), an denen der Laserstrahl in den nicht-laseraktiven Festkörpers ein- bzw. austritt, werden vorzugsweise mit einer Antireflexschicht versehen, um Reflexionsverluste des Laserstrahls zu vermeiden. Wird $YVO_4$ als Material für den nicht-laserakfiven Festkörper benutzt, kann schon mit einer $\lambda/4$-Einzelschicht ein Reflexionsgrad von deutlich unter 0,1 % für den ordentlichen Strahl erreicht werden.

Auch die Fläche, an der das Pumplicht (7) erstmals in den nicht-laseraktiven Festkörper (2) eintritt, wird zweckmäßigerweise mit einer Antireflexschicht versehen.

Vorzugsweise wird der nicht-laseraktive Festkörper so ausgestaltet, dass das Pumplicht an seinen Wänden durch Totalreflexion geführt wird. Die bekannten Formeln für die Totalreflexion und Brechung von Licht ergeben, dass die Totalreflexion unabhängig vom Winkel, mit dem das Pumplicht vom Halbleiterlaser emittiert wird, erfüllt ist, solange der Brechungsindex des nicht-laseraktiven Festkörpers größer als etwa 1,4 ist. In Zeichnung 2 erkennt man, wie die mehrfache Totalreflexion des Pumplichts (7) zu einer Homogenisierung der Pumplichtverteilung im laseraktiven Festkörper (1) führt. Eine homogene Pumplichtverteilung ist wichtig, damit im laseraktiven Festkörper parallele Isothermenebenen vorliegen und keine thermische Linse entsteht.

Zur Einkopplung des Pumplichts in den nicht-laseraktiven Festkörper ist dabei keine Optik notwendig, insbesondere ist keine Zylinderlinse zur Kollimation des Pumplichts in Richtung des großen Divergenzwinkels notwendig. Dies spart erhebliche Kosten.

Durch die Verbindung des dünnen laseraktiven Festkörpers (1) mit dem wesentlich dickeren, nicht-laseraktiven Festkörper (2) wird eine hohe mechanische Festigkeit des Gesamtsystems erreicht. Dies ist ein großer Vorteil, da ein großer, dünner laseraktiver Festkörper sonst bei der Montage leicht zerbrechen würde oder sich im Betrieb verformen würde. Eine Verformung würde im "beam steering" oder in Aberrationen resultieren, die für den Laserstrahl schädlich sind.

**Patentansprüche**

1. Festkörper-Laserverstärkersystem, mit mindestens einem laseraktiven Festkörper und einer Pumplichtquelle, *bei dem* der laseraktive Festkörper (1) scheibenförmig ausgebildet ist und an einer seiner beiden großen Flächen mit einem nicht-laseraktiven Festkörper (2) verbunden ist, bei dem die zweite der beiden großen Flächen des laseraktiven Festkörper (1), die nicht mit dem nicht-laseraktiven Festkörper (2) verbunden ist, mit einem Schichtsystem (3) versehen ist, an dem der zu erzeugende oder zu verstärkende Laserstrahl (8) reflektiert wird, *bei dem* der größte Teil der im laseraktiven Festkörper (1) erzeugten Wärme aus diesem entfernt wird, indem die mit dem Schichtsystem (3) versehene große Fläche des laseraktiven Festkörpers (1) von einer Kühleinrichtung (4) gekühlt wird, so dass Isothermenebenen im laseraktiven Festkörper (1) entstehen, die etwa parallel zur gekühlten Fläche verlaufen, bei dem der zu erzeugende oder zu verstärkende Laserstrahl (8) unter einem flachen Winkel auf das reflektierende Schichtsystem (3) auftritt, das heißt unter einem Winkel zum Temperaturgradienten größer als 45°, insbesondere 60° bis 89°, und bei dem der zu erzeugende oder zu verstärkende Laserstrahl (8) durch den nicht-laseraktiven Festkörper (2) hindurchgeht, bevor und nachdem er durch den laseraktiven Festkörper (1) hindurchgeht, *dadurch gekennzeichnet, dass* der nicht-laseraktive Festkörper (2) mit einer Grundfläches einer dazu parallelen Deckfläche, einer Strahleintrittsfläche (9), einer der Strahleintrittsfläche gegenüberliegenden Strahlaustrittsfläche (9) und trapezförmigen Seitenflächen so ausgeführt ist, dass die Grundfläche des nicht-laseraktiven Festkörpers (2) fest mit einer der beiden großen Flächen des laseraktiven Festkörpers (1) verbunden ist und, dass der Laserstrahl beim Eintritt und Austritt in oder aus dem nicht-laseraktiven Festkörper (2) dessen Strahleintritts- bzw. Strahlaustrittsfläche (9) senkrecht durchstößt.

2. Festkörper-Laserverstärkersystem nach Anspruch 1,
   **dadurch gekennzeichnet, dass** der laseraktive Festkörper quaderförmig ist.

3. Festkörper-Laserverstärkersystem nach Anspruch 1,
   **dadurch gekennzeichnet, dass** das Pumplicht (7) zunächst in den nicht-laseraktiven Festkörper (2) eingekoppelt wird.

4. Fertlkörper-Laserverstärkersystem nach einem der vorhergehenden Ansprüche, **dadurch gekennzeichnet, dass** das Pumplicht (7) in dem nicht-laseraktiven Festkörper (2) zumindest teilweise unter Totalreflexion geführt wird.

5. Festkörper-Laserverstärkersystem nach einem der vorhergehenden Ansprüche, **dadurch gekennzeichnet, dass** das Pumplicht (7) in dem nicht-laseraktiven Festkörper (2) durch Reflexion an geeignet beschichteten Flächen geführt wird.

6. Festkörper-Laserverstärkersystem nach einem der vorhergehenden Ansprüche, **dadurch gekennzeichnet, dass** das Pumplicht (7) von mindestens einem Halbleiterlaserbarren (5) stammt.

7. Festkörper-Laserverstärkersystem nach einem der Ansprüche 1 bis 5 **dadurch gekennzeichnet, dass** das Pumplicht (7) von einer Anordnung von Einzellaserdioden stammt.

8. Festkörper-Laserverstärkersystem nach einem der vorhergehenden Ansprüche, **dadurch gekennzeichnet, dass** die gekühlte Fläche mit einem das Pumplicht (7) reflektierenden Schichtsystem (3) versehen ist.

9. Festkörper-Laserverstärkersystem nach einem der vorhergehenden Ansprüche, **dadurch gekennzeichnet, dass** das Pumplicht (7) den laseraktiven Festkörper (1) mehrfach durchläuft.

10. Festkörper-Laserverstärkersystem nach einem der vorhergehenden Ansprüche, **dadurch gekennzeichnet, dass** der Laserstrahl (8) senkrecht durch die Strahleintrittsfläche (9) und die Strahlaustrittsfläche (9) des nicht-laseraktiven Festkörper (2) hindurchtritt, so dass kein Astigmatismus entsteht.

## Claims

1.  A solid-state laser amplifier system with at least one laser-active solid and a pumped light source, wherein the laser-active solid (1) is realized in a disk-shaped fashion and one of its two large surfaces is connected to a non-laser-active solid (2), wherein the second large surface of the laser-active solid (1) that is not connected to the non-laser-active solid (2) is provided with a layer system (3), on which the laser beam (8) to be generated or amplified is reflected, wherein the majority of the heat generated in the laser-active solid (1) is removed therefrom by cooling the large surface of the laser-active solid (1) that is provided with the layer system (3) by means of a cooling device (4) such that isothermal planes are created in the laser-active solid (1) which extend approximately parallel to the cooled surface, wherein the laser beam (8) to be generated or amplified is incident on the reflecting layer system (3) at a shallow angle, i.e., at an angle greater than 45° referred to the temperature gradient, particularly 50°-89°, and wherein the laser beam (8) to be generated or amplified passes through the non-laser-active solid (2) before and after it passes through the laser-active solid (1), **characterized in that** the non-laser-active solid (2) is realized with a bottom surface, a top surface that lies approximately parallel to the bottom surface, a beam incidence surface (9), a beam emergence surface (9) that lies opposite of the beam incidence surface and trapezoidal lateral surfaces, namely such that the bottom surface of the non-laser-active solid (2) is rigidly connected to one of the two large surfaces of the laser-active solid (1), and **in that** the laser beam perpendicularly penetrates the beam incidence surface and the beam emergence surface (9) of the non-laser-active solid (2) when it is incident on and emerges therefrom.

2.  The solid-state laser amplifier system according to Claim 1, **characterized in that** the laser-active solid is realized in a cuboid fashion.

3.  The solid-state laser amplifier system according to Claim 1, **characterized in that** the pumped light (7) is first coupled into the non-laser-active solid (2).

4.  The solid-state laser amplifier system according to one of the preceding claims, **characterized in that** the pumped light (7) is at least partially guided in the non-laser-active solid (2) by total reflection.

5.  The solid-state laser amplifier system according to one of the preceding claims, **characterized in that** the pumped light (7) is guided in the non-laser-active solid (2) by reflection on suitably coated surfaces.

6.  The solid-state laser amplifier system according to one of the preceding claims, **characterized in that** the pumped light (7) originates from at least one semiconductor laser array [unconfirmed translation] (5).

7.  The solid-state laser amplifier system according to one of Claims 1-5, **characterized in that** the pumped light (7) originates from an arrangement of individual laser diodes.

8.  The solid-state laser amplifier system according to one of the preceding claims, **characterized in that** the cooled surface is provided with a layer system (3) that reflects the pumped light (7).

9.  The solid-state laser amplifier system according to one of the preceding claims, **characterized in that** the pumped light (7) passes through the laser-active solid (1) several times.

10. The solid-state laser amplifier system according to one of the preceding claims, **characterized in that** the laser beam (8) perpendicularly passes through the beam incidence surface (9) and the beam emergence surface (9) of the non-laser-active solid (2) such that no astigmatism is created.

## Revendications

1.  Système amplificateur de laser à corps solide, comprenant au moins un corps solide actif au niveau laser et une source de lumière de pompage, dans lequel le corps solide actif au niveau laser (1) est réalisé en forme de disque et est relié, au niveau d'une de ses deux grandes surfaces, à un corps solide inactif au niveau laser (2), dans lequel la deuxième des deux grandes surfaces du corps solide actif au niveau laser (1) qui n'est pas reliée au corps solide inactif au niveau laser (2) est pourvue d'un système de couches (3) sur lequel est reflété le rayon laser (8) à générer ou à amplifier, dans lequel la majeure partie de la chaleur générée dans le corps solide actif au niveau laser (1) est éliminée de celui-ci du fait que la grande surface pourvue du système de couches (3) du corps solide actif au niveau laser (1) est refroidie par un dispositif de refroidissement (4), de sorte qu'il se forme dans le corps solide actif au niveau laser (1) des plans isothermes qui s'étendent approximativement à la parallèle de la surface refroidie, dans lequel le rayon laser à générer ou à amplifier (8) arrive suivant un angle plat sur le système de couches réfléchissant (3), c'est-à-dire suivant un angle par rapport au gradient de température supérieur à 45°, notamment 60° à 89°, et dans lequel le rayon laser à générer ou à amplifier (8) traverse le corps solide inactif au niveau laser (2) avant et après avoir traversé le corps solide actif au niveau laser (1), **caractérisé en ce que** le corps solide inactif au niveau laser (2) comportant une surface de base, une surface de recouvrement parallèle à celle-ci, une surface d'entrée de rayon (9), une surface de sortie de rayon (9) opposée à la surface d'entrée de rayon (9) et des surfaces latérales en forme de trapèze est réalisé de manière à ce que la surface de base du corps solide inactif au niveau laser (2) est reliée fixement à une des deux grandes surfaces du corps solide actif au niveau laser (1) et que le rayon laser, à l'entrée dans et à la sortie du corps solide inactif au niveau laser (2), transperce verticalement sa surface d'entrée ou de sortie de rayon.

2. Système amplificateur de laser à corps solide selon la revendication 1, **caractérisé en ce que** le corps solide actif au niveau laser a une forme quadratique.

3. Système amplificateur de laser à corps solide selon la revendication 1, **caractérisé en ce que** la lumière de pompage (7) est d'abord intégrée dans le corps solide inactif au niveau laser (2).

4. Système amplificateur de laser à corps solide selon une des revendications précédentes, **caractérisé en ce que** la lumière de pompage (7) est guidée dans le corps solide inactif au niveau laser (2) du moins partiellement avec une réflexion totale.

5. Système amplificateur de laser à corps solide selon une des revendications précédentes, **caractérisé en ce que** la lumière de pompage (7) est guidée dans le corps solide inactif au niveau laser (2) par réflexion sur des surfaces revêtues de manière appropriée.

6. Système amplificateur de laser à corps solide selon une des revendications précédentes, **caractérisé en ce que** la lumière de pompage (7) provient d'au moins une barre laser à semiconducteurs (5).

7. Système amplificateur de laser à corps solide selon une des revendications 1 à 6, **caractérisé en ce que** la lumière de pompage (7) provient d'un agencement de diodes laser distinctes.

8. Système amplificateur de laser à corps solide selon une des revendications précédentes, **caractérisé en ce que** la surface refroidie est pourvue d'un système de couches (3) reflétant la lumière de pompage (7).

9. Système amplificateur de laser à corps solide selon une des revendications précédentes, **caractérisé en ce que** la lumière de pompage (7) provient traverse plusieurs fois le corps solide actif au niveau laser (1).

10. Système amplificateur de laser à corps solide selon une des revendications précédentes, **caractérisé en ce que** le rayon laser (8) traverse verticalement la surface d'entrée de rayon (9) et la surface de sortie de rayon (9) du corps solide inactif au niveau laser (2), de sorte qu'il ne se produit pas d'astigmatisme.

Zeichnung 1:

Zeichnung 2: